# EUROPÄISCHE PATENTSCHRIFT

(11) **EP 0 557 594 B1**
(45) Veröffentlichungstag und Bekanntmachung des Hinweises auf die Patenterteilung: **17.01.1996**
(21) Anmeldenummer: 92120445.9
(22) Anmeldetag: 01.12.1992
(51) Int. Cl.: F16L 33/26, F16L 19/025

(54) **Verfahren zum Montieren eines Anschlusselementes**
Method for mounting a connection element
Méthode de montage d'un élément de connexion

(30) Priorität: 24.02.1992 DE 4205537
(43) Veröffentlichungstag der Anmeldung: 01.09.1993
(73) Patentinhaber: Witzenmann GmbH Metallschlauch-Fabrik Pforzheim, D-75175 Pforzheim (DE)
(72) Erfinder: Schüttler, Peter, W-7532 Niefern-Öschelbronn (DE); Winter, Klaus, Dipl.-Ing., W-7070 Schwäbisch Gmünd (DE)
(74) Vertreter: Lemcke, Rupert, Dipl.-Ing.

(56) Entgegenhaltungen:
- CH-A- 680 748
- FR-A- 2 542 845
- US-A- 3 743 328

## Beschreibung

Die Erfindung betrifft ein Verfahren gemäß dem Oberbegriff des Anspruchs 1 bzw. des Anspruchs 2.

Wellschläuche und Wellbälge haben eine wellenförmig profilierte Wandung. Nach der Wellenform unterscheidet man zwei Grundtypen: Das Ringwellprofil und das Wendelwellprofil. Die Erfindung ist bei Ringwellprofilen anwendbar.

Zum lösbaren Verbinden oder Anschließen von Wellschläuchen oder Wellbälgen aus Metall ist es bekannt, die Schläuche oder Bälge endseitig mit einem Losflansch oder drehbaren Gewindeanschlüssen zu versehen.

Gemäß dem Prospektblatt 338/3/91/20 über flexible Schnellmontage-Schläuche der Anmelderin sind einbaufertige Ringwellschlauchleitungen bekannt, die mit Glattrohrenden versehen sind. Auf letztere werden die Anschlußelemente, hier Überwurfmutter, aufgesteckt und danach der Rand des Glattrohres zu einem Dichtbund umgebördelt. Dieses Prinzip wird auch bei Ringwellbälgen angewendet. Diese Ausführung erlaubt nur eine fabrikmäßige Konfektionierung der Schlauchleitungen bzw. -bälge. Durch die Glattrohrenden ist eine intermittierende Fertigung bedingt und eine Vorgabe der Schlauch- bzw. Balglänge erforderlich. Auch Losflansch-Elemente werden auf diese Art befestigt.

Gemäß der selben Veröffentlichung ist es bekannt, zur Selbstmontage von drehbaren Anschlußelementen, hier Überwurfmutter, durch das Einsetzen eines geteilten Klemmringes in das erste oder zweite Wellental eines Ringwellschlauches einen Anschlag für das Anschlußelement und durch Anstauchen der ersten bzw. der zwei ersten Wellen einen Dichtbund zu schaffen. Der Klemmring hat einen dem lichten Innendurchmesser der Überwurfmutter entsprechenden Außendurchmesser. Das Anschlußelement kann auch mit einem Außengewinde versehen oder als Losflansch ausgebildet sein. - Auch diese Prinzip wird bei Ringwellbälgen angewendet.

Diese Ausführung hat den Vorteil, daß vor Ort die jeweils benötigte Schlauch- oder Balglänge von einer Meterware abgetrennt und mit Anschlußelementen versehen werden kann. Nachteilig ist, daß die lose mitgeführten oder vormontierten Klemmringhälften und Anschlußelemente leicht verlorengehen und Geschick und Sorgfalt beim Zurichten erforderlich sind, um eine druckdichte Anschlußverbindung zu gewährleisten.

Die Aufgabe der Erfindung besteht darin, ein Verfahren zum Montieren von zur lösbaren Verbindung geeigneten Anschlußelementen am Ende von Ringwellschläuchen und -bälgen anzugeben, das eine einfache Handhabung und Materialeinsparung ermöglicht und einen druckdichten Anschluß gewährleistet.

Diese Aufgabe wird durch die im Anspruch 1 bzw. Anspruch 2 angegebene Verfahren gelöst. Die unteransprüche zeigen weitere Verfahrensmerkmale auf.

Die durch die Erfindung erzielten Vorteile bestehen insbesondere darin, daß die Ringwellschläuche und die Ringwellbälge als Meterware kontinuierlich hergestellt und auf Bedarfslängen zugeschnitten werden können, daß durch das Verpressen von einer oder mehreren Ringwellen zu einem Dichtbund die bisher notwendigen Klemmringe wegfallen und dieses Verfahren mit einer geeigneten Vorrichtung vor Ort sicher und präzise angewendet werden kann.

Anhand von zwei Ausführungsbeispielen wird das Verfahren gemäß der Erfindung in Verbindung mit den Zeichnungen nachfolgend näher erläutert. Es zeigen:
- Figur 1a und 1b: eine erste Ausführung einer Anschlußelement-Montage nach dem erfindungsgemäßen Verfahren nach Anspruch 1 in Seitenansicht und teilweiser Schnittdarstellung.
- Figur 2a und 2b: die schematische Darstellung einer Streckvorrichtung zur Vorbehandlung eines Ringwellschlauches.
- Figur 3a bis 3c: eine zweite Ausführung einer Anschlußelement-Montage nach dem erfindungsgemäßen Verfahren nach Anspruch 2 in Seitenansicht und teilweise Schnittdarstellung.

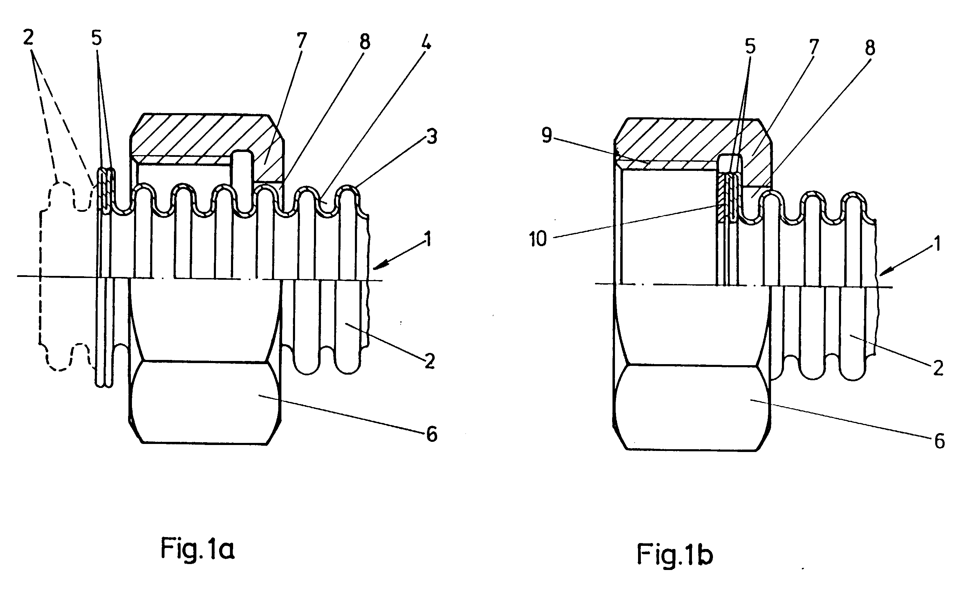

Die beiden nachberschiebenen Ausführungen gehen von der Montage einer Überwurfmutter als Anschlußelement auf einem Ringwellschlauch aus. An die Stelle der Überwurfmutter kann ein Anschlußelement mit Außengewinde oder ein Losflansch treten. An die Stelle des Ringwellschlauchs kann ein Ringwellbalg treten, der sich vom Schlauch im wesentlichen nur in der Dimensionierung und dem Verwendungszweck unterscheidet. Die Fig.1a und 1b zeigen die Montage einer Überwurfmutter 6 auf einem Ringwellschlauch 1 gemäß dem Verfahren nach Anspruch 1 in Seitenansicht; die obere Hälfte im Längsschnitt dargestellt. Die Zeichnung Fig.1a zeigt das Ende eines Ringwellschlauchs 1 mit aufgeschobener Überwurfmutter 6. Deren zentrische Bohrung 3 im Bund 7 hat einen um Zehntelmillimeter größeren Durchmesser, als die Wellenringe 2 des Schlauchs 1 im Außenmaß (Wellenberg 3). Die Überwurfmutter 6 ist entsprechend der Zeichnung Fig.1a soweit auf den Wellschlauch 1 aufgeschoben, daß die endseitigen Ringwellen 2 frei zugänglich sind. Die beispielsweise zwei äußeren Ringwellen 2 werden mit einer nicht gezeigten Vorrichtung in der dargestellten Weise zu einem Dichtbund 5 zusammengepreßt. Durch das axiale Zusammendrücken der Wellenberge 3 und der Wellentäler 4 der Ringwellen 2 wird der Durchmesser des Dichtbundes 5 durch die radiale Materialerstreckung um Millimeter größer, als der Ringwellendurchmesser des Schlauchs 1.

Fig.1b zeigt die mit seinem Bund 7 am Dichtbund 5 des Ringwellschlauchs 1 anliegende Überwurfmutter 6. Die Überlappung mit dem Bund 7 in Verbindung mit einem Dichtring 10 gewährleistet im verschraubten Zustand eine exakte Abdichtung - Der Durchmesser des Dichtbundes und der entsprechend dimensionierte Dichtring 10 bestimmen das Maß des Innengewindes 9 und damit die Größe des Anschlußelementes.

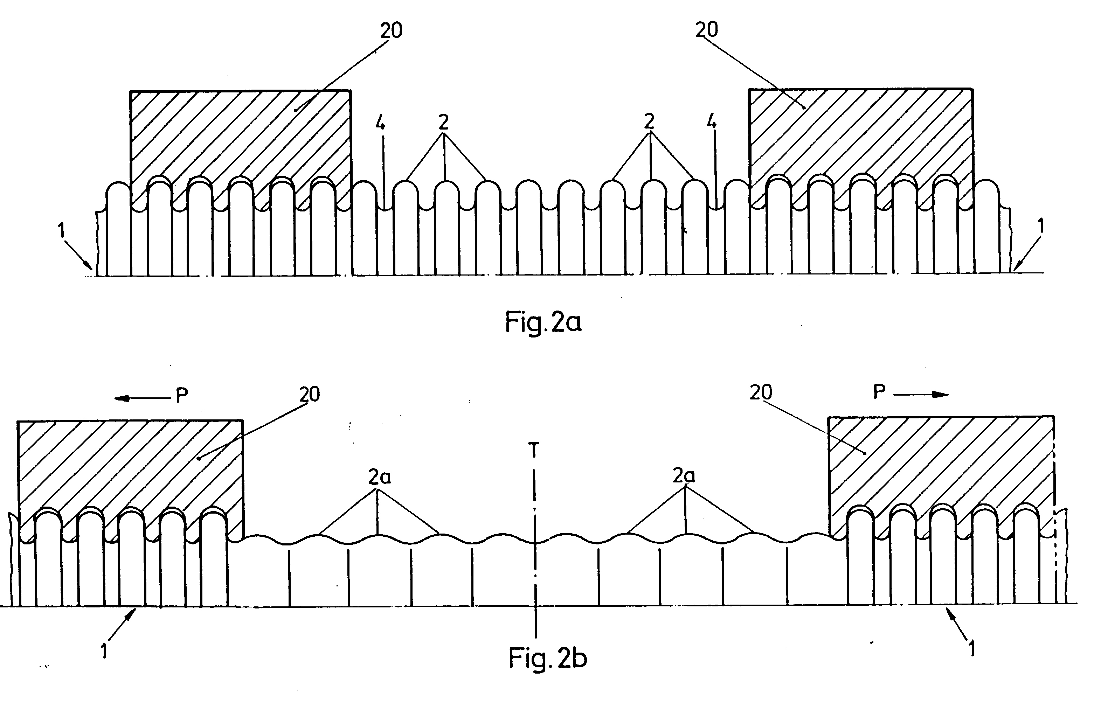

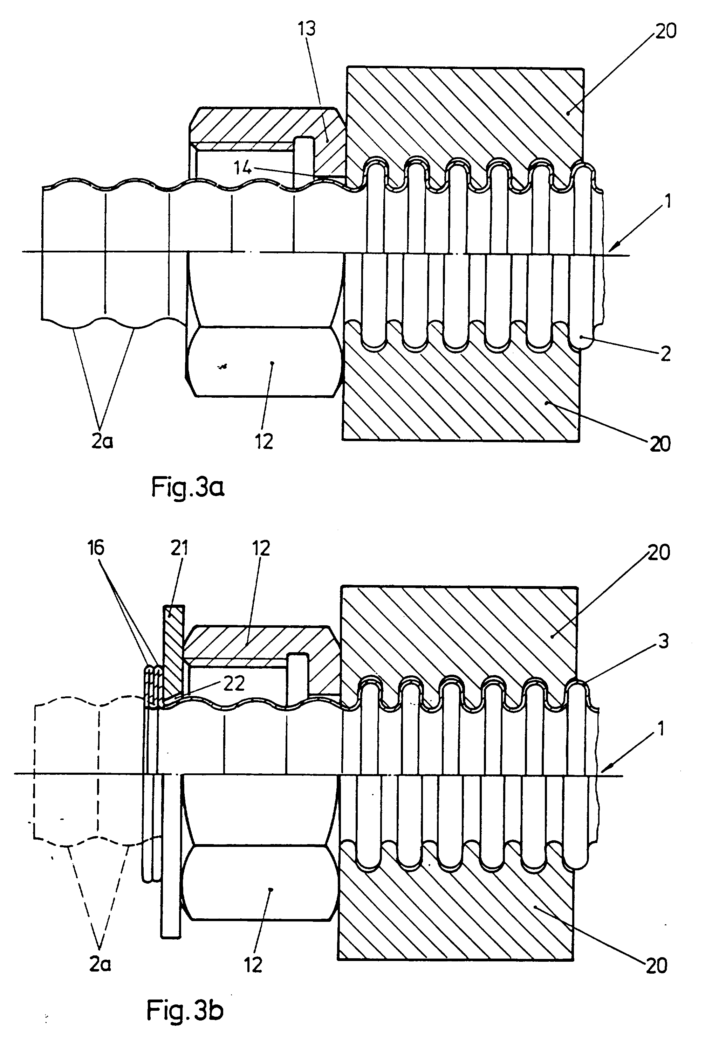

Die Fig.3a bis 3c zeigen die Montage einer Überwurfmutter 12 auf einem Ringwellschlauch 1 gemäß dem Verfahren nach Anspruch 2 in Seitenansicht. Die obere Hälfte ist im Längsschnitt dargestellt. Als vorbereitende Maßnahme ist das Ende des Ringwellschlauchs 1 im Bereich von z.B. fünf Ringwellen 2 durch Strecken, Walzen oder Rollen im Außendurchmesser auf ein vorbestimmtes Maß verringert. Anhand der schematisch dargestellten Zeichnungen Fig.2a und 2b wird der Vorgang gemäß Anspruch 3 erläutert, durch das der Ringwellschlauch 1 über den genannten Bereich gestreckt wird.

Die Fig.2a und 2b zeigen zur Vereinfachung nur die obere Hälfte eines Ringwellschlauchs 1. In einem vorgegebenen Abstand von z.B. zehn Ringwellen 2 greifen in die Wellentäler 4 der angrenzenden Ringwellen 2 zweigeteilte ringförmige Klauen 20, die den Schlauch 1 formschlüssig umfassen. Die Klauen 20 lassen durch die Schnittdarstellung den Formschluß mit dem Ringwellenschlauch 1 erkennen. Die Klauen 20 sind Teile einer nicht dargestellten Ziehvorrichtung, über die - ausgehend vom Zustand gemäß Fig.2a - die Klauen 20 in Pfeilrichtung P bewegt werden. Im Verlauf dieser Bewegung wird der sich zwischen den Klauen befindliche Teil des Ringschlauchs 1 auseinandergezogen. Die Ringwellen 2 werden dabei soweit gestreckt, daß sie letztendlich nur noch eine geringe Restwelligkeit bei verringertem Außendurchmesser gemäß Fig.2b haben (Pos. 2a). Danach wird der Ringwellschlauch 1 in der Mitte des gestreckten Teils (Trennlinie T) durchgetrennt. Dadurch sind zwei Wellschlauchenden gegeben, die für eine Weiterbehandlung gemäß den Fig.3a.bis 3c vorbereitet sind.

Der Ringwellschlauch 1 verbleibt während der Weiterbehandlung in Eingriff mit der Klaue 20 oder einer entsprechenden Halterung, die weiterhin als Widerlager dient. Gemäß Fig.3a wird eine Überwurfmutter 12 auf die gestreckten Ringwellen 2a bis zum Anschlag an die Klaue 20 geschoben. Der Durchmesser der Bohrung 14 im Bund 13 der Überwurfmutter 12 ist geringfügig größer, als der der gestreckten Ringwellen 2a. Der gegenüber der Ausführung nach Fig.1a und 1b geringere Bohrungsdurchmesser gestattet unter Umständen eine Überwurfmutter 12 bzw. Schraubverbindung mit geringerem Gewindedurchmesser, die Gewichts- und Preisvorteile haben kann.

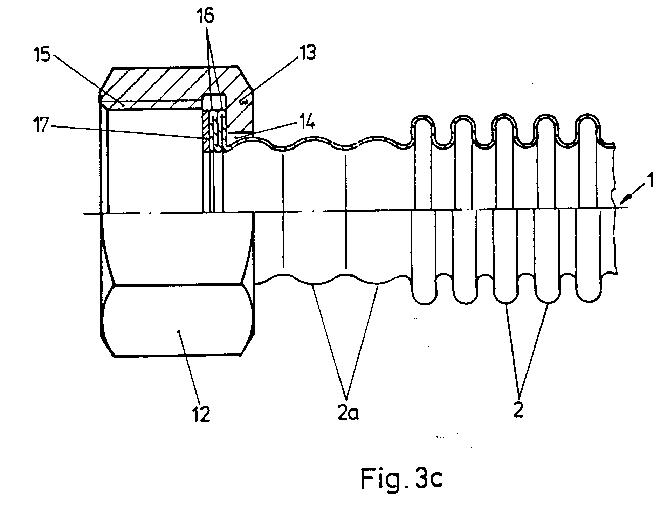

Entsprechend dem zu Fig.1a und 1b Beschriebenen wird gemäß Fig.3b aus den zwei äußeren gestreckten Ringwellen 2a durch axiales Zusammenpressen ein Dichtbund 16 gebildet. Zu diesem Zweck wird anliegend an der Überwurfmutter 12 ein aus zwei Teilen bestehender Preßring 21 um den gestreckten Teil des Ringwellschlauchs 1 gelegt. Der Preßring 21 hat eine in axialer Richtung konisch verlaufende Bohrung, die in ihrer Konizität der Welligkeit der gestreckten Ringe 2a entspricht und eng an dieser anliegt. Gegen diesen Preßring 21 werden anschließend die nach außen vorstehenden gestreckten Ringwellen 2a durch eine nicht dargestellte Preßeinrichtung zum Dichtbund 16 angestaucht. Die Restwelligkeit und die ursprüngliche Verformung stellen sicher, daß die Ringwellen 2a über ihre ursprüngliche Form hinaus sich selbsttätig zum Dichtbund 16 zusammenfalten. Dieser hat einen Durchmesser, der etwas größer ist, als der Schlauch 1 im Bereich der Wellenberge 3. Abschließend wird der Preßring 21 und die Klaue 20 entfernt. Die Überwurfmutter 12 wird nun gemäß Fig.3c bis zum Anschlag des Bundes 13 am Dichtbund 16 vorgeschoben. Mit dem Einsetzen eines Dichtungsringes 17 ist der Ringwellschlauch 1 an diesem Ende fertig zum lösbaren Ansschluß. Die relativ breite Überlappung des Dichtbundes 16 mit dem Bund 13 des Überwurfmutter 12 gewährleistet eine druckdichte Verbindung bis zum Nenndruck des Schlauchs bzw. Balges.

## Patentansprüche

1. Verfahren zum Montieren eines zur lösbaren Verbindung geeigneten Anschlußelementes (6) am Ende eines Ringwellschlauches (1) oder -balges aus Metall, wobei das Anschlußelement (6) eine dem Außendurchmesser der Wellenberge (3) des Schlauches (1) oder Balges an dessen Ende entsprechende Bohrung (8) hat, über die es auf das Ende des Schlauches (1) oder Balges aufgeschoben wird, und wobei nach dem Aufschieben des Anschlußelementes (6) eine oder mehrere endseitige Wellen (2) des Ringwellschlauches (1) oder -balges zu einem Dichtbund (5) axial zusammengepreßt werden,
dadurch gekennzeichnet,
daß das Anschlußelement (6) derart gewählt wird, daß der Durchmesser der Bohrung (8) kleiner als der Durchmesser des zusammengepreßten Dichtbundes (5) ist.

2. Verfahren zum Montieren eines zur lösbaren Verbindung geeigneten Anschlußelementes (12) am Ende eines Ringwellschlauches (1) oder -balges aus Metall, wobei das Anschlußelement (12) eine dem Außendurchmesser der Wellenberge des Schlauches (1) oder Balges an dessen Ende entsprechende Bohrung (14) hat, über die es auf das Ende des Schlauches (1) oder Balges aufgeschoben wird, und wobei nach dem Aufschieben des Anschlußelementes (12) eine oder mehrere endseitige Wellen (2a) des Ringwellschlauches (1) oder -balges zu einem Dichtbund (16) axial zusammengepreßt werden,
dadurch gekennzeichnet,
daß vor dem Aufschieben des Anschlußelementes (12) mehrere endseitige Wellen (2a) des Ringwellschlauches (1) oder -balges im Außendurchmesser durch Strecken in Längsrichtung verringert werden, daß nach dem Aufschieben des Anschlußelementes (12) mit einer diesem verringerten Außendurchmesser entsprechenden Bohrung (14) eine oder mehrere der im Außendurchmesser verringerten Wellen (2a) durch Stauchen über ihre ursprüngliche Form hinaus zu einem Dichtbund (16) zusammengepreßt werden, und daß das Anschlußelement (12) derart gewählt wird, daß der Durchmesser der Bohrung (14) kleiner als der Durchmesser des zusammengepreßten Dichtbundes (16) ist.

3. Verfahren nach Anspruch 2,
dadurch gekennzeichnet,
daß der Ringwellschlauch (1) oder -balg vor einem Ablängen im Bereich einer vorgesehenen Trennstelle über die doppelte Anzahl der im Außendurchmesser zu verringernden Wellen (2a) durch eine Ziehvorrichtung auf den vorgegebenen Außendurchmesser gestreckt wird und daß anschließend der Schlauch (1) oder Balg in der Mitte (T) des gestreckten Teiles getrennt wird.

4. Verfahren nach Anspruch 3, wobei eine Ziehvorrichtung verwendet wird, die zwei ringförmige, zweigeteilte Klauen (20) hat, die paßgenau in die Wellentäler (3) ragend den Ringwellschlauch (1) bzw. -balg formschlüssig umgreifen.

## Claims

1. A process for mounting a connection element (6) suited for a releasable coupling at the end of a metallic annularly corrugated hose (1) or metallic annularly corrugated bellows, wherein the connecting element (6) has at its end a bore (8) corresponding to the outer diameter of the peaks (3) of the corrugations of the hose (1) or bellows, through which bore it is pushed up on to the end of the hose (1) or bellows, and wherein after pushing the connection element (6) up one or several terminal corrugations (2) of the annularly corrugated hose (1) or annularly corrugated bellows are axially compressed into a sealed joint (5),
**characterised in that**
the connecting element (6) is chosen such that the diameter of the bore (8) is smaller than the diameter of the compressed sealed joint (5).

2. A process for mounting a connection element (12) suited for a releasable coupling at the end of a metallic annularly corrugated hose (1) or metallic annularly corrugated bellows, wherein the connecting element (6) has at its end a bore (14) corresponding to the outer diameter of the peaks (3) of the corrugations of the hose (1) or bellows, through which bore it is pushed up on to the end of the hose (1) or bellows, and wherein after pushing the connection element (12) up one or several terminal corrugations (2a) of the annularly corrugated hose (1) or annularly corrugated bellows are axially compressed into a sealed joint (16),
**characterised in that**
before pushing the connecting element (12) up several terminal corrugations (2a) of the annularly corrugated hose (1) or annularly corrugated bellows are reduced in outer diameter by stretching in the longitudinal direction, in that after pushing the connecting element (12) up with a bore (14) corresponding to this reduced outer diameter one or more of the corrugations (2a) of reduced outer diameter are compressed by upsetting, over and above their original shape to a sealed joint (16), and in that the diameter of the bore (14) is chosen so as to be smaller than the diameter of the compressed sealed joint (16).

3. A process according to claim 2,
**characterised in that**
before being cut to length the in region of a previously provided separation location over double the number of the corrugations (2a) of reduced outer diameter, the annularly corrugated hose (1) or annularly corrugated bellows is stretched by a drawing machine to the predetermined outer diameter, and in that thereafter the hose (1) or bellows is separated in the middle (T) of the stretched part.

4. A method according to claim 3, wherein a drawing apparatus is used which has two annular bifurcated claws (20) which project in an accurate fit into the troughs (3) of the corrugations to encompass the annularly corrugated hose (1) or annularly corrugated bellows in a dovetailing manner.

## Revendications

1. Procédé pour monter un élément de raccordement (6) approprié pour établir une liaison démontable à l'extrémité d'un tuyau (1) ou soufflet à ondes annulaires, en métal, dans lequel l'élément de raccordement (6) possède un alésage (8) qui correspond au diamètre extérieur des crêtes d'ondes (3) du tuyau (1) ou soufflet, à l'extrémité de ce tuyau ou de ce soufflet, alésage par lequel il est emmanché sur l'extrémité du tuyau (1) ou du soufflet, et dans lequel, après l'emmanchement de l'élément de raccordement (6), on comprime axialement l'une contre l'autre une ou plusieurs ondes d'extrémité (2) du tuyau (1) ou du soufflet à ondes annulaires, pour en former une collerette d'étanchéité (5),
caractérisé
en ce que l'élément de raccordement (6) est choisi de manière que le diamètre de l'alésage (8) soit plus petit que le diamètre de la collerette d'étanchéité comprimée (5).

2. Procédé pour monter un élément de raccordement (12) approprié pour établir une liaison démontable à l'extrémité d'un tuyau (1) ou soufflet à ondes annulaires, en métal, dans lequel l'élément de raccordement (12) possède un alésage (14) qui correspond au diamètre extérieur des crêtes d'ondes du tuyau (1) ou soufflet, à l'extrémité de ce tuyau ou de ce soufflet, alésage par lequel il est emmanché sur l'extrémité du tuyau (1) ou du soufflet, et dans lequel, après l'emmanchement de l'élément de raccordement (12), on comprime axialement l'une contre l'autre une ou plusieurs ondes d'extrémité (2a) du tuyau (1) ou du soufflet à ondes annulaires, pour en former une collerette d'étanchéité (16),
caractérisé
en ce qu'avant l'emmanchement de l'élément de raccordement (12), on réduit plusieurs ondes d'extrémité (2a) du tuyau (1) ou soufflet à ondes annulaires en diamètre extérieur, par étirage dans la direction longitudinale, en ce qu'après l'emmanchement de l'élément de raccordement (12) qui possède un alésage (14) correspondant à ce diamètre intérieur réduit, on comprime l'une contre l'autre une ou plusieurs ondes (2a) réduites en diamètre extérieur, par refoulement au-delà de leur forme initiale, pour former une collerette d'étanchéité (16), et en ce que l'élément de raccordement (12) est choisi de manière que le diamètre de l'alésage (14) soit plus petit que le diamètre de la collerette d'étanchéité comprimée (16).

3. Procédé selon la revendication 2,
caractérisé
en ce qu'avant de le couper à longueur dans la région d'une zone de coupe prévue, on étire le tuyau (1) ou soufflet à ondes annulaires jusqu'à un diamètre extérieur prédéterminé, au moyen d'un dispositif d'étirage, sur un nombre d'ondes (2a) double de celui des ondes qu'on doit réduire en diamètre extérieur, et qu'ensuite, on coupe le tuyau (1) ou soufflet au milieu (T) de la partie étirée.

4. Procédé selon la revendication 3, dans lequel on utilise un dispositif d'étirage qui possède deux mâchoires annulaires (20) divisées en deux parties, qui entourent le tuyau (1) ou soufflet à ondes annulaires en formant une liaison par sûreté de forme, en s'engageant exactement dans les creux d'ondes (3).
